# EUROPÄISCHE PATENTSCHRIFT

(11) **EP 2 127 724 B1**
(45) Veröffentlichungstag und Bekanntmachung des Hinweises auf die Patenterteilung: **14.03.2018**
(21) Anmeldenummer: 09161322.4
(22) Anmeldetag: 28.05.2009
(51) Int. Cl.: B01D 46/10, B60H 3/06, B01D 46/52, B01D 46/00

(54) **Filterelement**
Filter element
Elément de filtre

(30) Priorität: 30.05.2008 DE 202008007292 U
(43) Veröffentlichungstag der Anmeldung: 02.12.2009
(73) Patentinhaber: MANN+HUMMEL GmbH, 71636 Ludwigsburg (DE)
(72) Erfinder: Trautmann, Pius, 70499 Stuttgart (DE); Volkmer, Daniel, 71282 Hemmingen (DE)

(56) Entgegenhaltungen:
- DE-A1- 10 231 696
- DE-C1- 19 757 423
- JP-A- H10 286 421
- US-A- 5 603 476
- US-A- 5 639 287
- US-A1- 2003 066 275
- US-A1- 2003 177 745

## Beschreibung

### Technisches Gebiet

Die vorliegende Erfindung betrifft ein Filterelement, insbesondere ein Innenraumfilter zum Filtern von Luft für den Innenraum eines Kraftfahrzeugs.

Ein entsprechendes Filterelement dient der Filterung von Fluidströmungen oder gasförmigen Medien, beispielsweise zur Filterung einer Luftströmung, die dem Fahrzeuginnenraum eines Kraftfahrzeugs zugeführt wird. Obwohl auf beliebige Filterelemente anwendbar, wird die vorliegende Erfindung sowie die ihr zugrunde liegende Problematik nachfolgend für ein Filterelement zur Filterung von Luft für den Innenraum eines Kraftfahrzeugs beschrieben. Solche Filter werden nachfolgend auch kurz als Kfz-Innenraumluftfilter oder auch Innenraumfilter bzw. Kabinenluftfilter bezeichnet.

Die zunehmende Luftverunreinigung, insbesondere in Großstädten, in Verbindung mit dem Einsatz moderner Klimaanlagen macht es wünschenswert und auch erforderlich, die von außen in den Innenraum eines Kraftfahrzeuges geleitete und aufbereitete bzw. klimatisierte Luft mittels geeigneter Filter zu reinigen. Hierfür kommen beispielsweise Partikelfilter, Geruchsfilter oder deren Kombination miteinander in Betracht, die in der Luft enthaltene Schwebstoffe, Partikel und Gerüche aus der Umgebungsluft möglichst gut herausfiltern bzw. absorbieren sollen. Solche Filter zur Filterung von Luft für den Innenraum eines Kraftfahrzeuges sind in einer Vielzahl von Ausführungsformen und Varianten allgemein bekannt, sodass auf deren Aufbau und Funktionsweise nachfolgend nur kurz eingegangen wird.

Da die Wirksamkeit von Filtern insbesondere von der Größe der von der Luft durchströmten Oberfläche des Filters abhängig ist, kommen für KFZ-Innenraumluftfilter überwiegend zickzackförmig gefaltete Filtermedien, die auch als plissierte Filtermedien bezeichnet werden, zum Einsatz. Durch die Faltung des verwendeten Filtermediums kann abhängig von der Faltungshöhe, dem Faltungsabstand und dem Grad des Zusammenstauchens dieser ziehharmonikaähnlichen Faltenpacks der verschiedenen Faltabschnitte des Filtermediums eine Vergrößerung der von dem Luftstrom durchströmten Filterfläche ermöglicht werden.

Da einerseits möglichst wenig Filtermaterial eingesetzt werden soll, aber andererseits eine ausreichende Stabilität des Filterelements notwendig ist, wurde vorgeschlagen, die Ränder des Faltenpacks mit Armierungen bzw. Verstärkungen zu versehen. Dadurch kann ein Filterelement gegenüber Stauchungen oder Verscheren, z.B. beim Ein- und Ausbau geschützt werden.

### Stand der Technik

Aus der EP 0623377 B1 ist zum Beispiel ein Filtereinsatz zum Filtern von Frischluft für den Innenraum eines Fahrzeugs bekannt, das einen um dessen Stirnflächen verlaufenden Winkelstreifen aufweist. Durch einen derartigen Winkelstreifen wird das dazwischen liegende Faltenpack und die Seitenbänder verstärkt und gegenüber Verformung geschützt. Nachteilig ergibt sich bei dem Filterelement der EP 0623377 B1 ein aufwendiges Herstellungsverfahren für das umlaufende stützende Band.

Aus der DE 197 57 423 C1 ist wiederum ein Filtereinsatz bekannt, bei dem zur Stützung von Stirnseiten eines Faltenpacks die jeweilige Endfaltenkanten von einem U-förmigen Verstärkungsabschnitt umschlossen sind, der zum Beispiel aus einem festen Kunststoffmaterial geformt sein kann. Das entsprechende Verstärkungselement, welches beidseitig die Endfaltenabschnitte umschließt, kann dabei auch mehrlagige Faltenpacks zusammenhalten. Das Einführen von Faltenabschnitten in den U-förmigen Zwischenraum ist jedoch insbesondere im Herstellungsverfahren schwierig und zeitaufwendig.

Die US 5 639 287 offenbart ein Filterelement mit einem Faltenpack, welches mittels Faltungen zickzackförmig gefaltete Faltabschnitte sowie zwei auf Faltenprofile aufgeklebte Vliesbänder aufweist, die zur Stabilisierung und Aufrechterhaltung der Faltungen in dem Zustand dienen, in dem das Filterelement bis zur Grenze gestreckt wird. Das Filterelement weist einen Rahmen mit zwei Abschlusselementen auf, welche derart eine obere Rasteinrichtung aufweisen, dass die Abschlusselemente durch einen Klemmschluss an der ersten oberseitigen Faltung von oben eingreifen, die einer Endfaltenkante folgt, und mit einem Bogenabschnitt an einer unterseitigen Endfaltenkante anliegen.

Vor diesem Hintergrund liegt der vorliegenden Erfindung die Aufgabe zugrunde, ein verbessertes Filterelement zu schaffen.

### Offenbarung der Erfindung

Diese Aufgabe wird durch ein Filterelement mit den Merkmalen des Patentanspruchs 1 gelöst.

Demgemäß wird ein Filterelement beansprucht, welches insbesondere einen Innenraumfilter für ein Kraftfahrzeug ausbilden kann. Das Filterelement weist ausschließlich ein Faltenpack, zwei auf die Faltenprofile der Faltungen aufgeklebte Rahmenelemente und zwei auf die jeweiligen Endfalten geklemmte Abschlusselemente auf, wobei der Faltenpack mittels Faltungen zickzackförmig gefaltete Faltabschnitte aufweist. Es ist ein an einem Endfaltenabschnitt anbringbares Abschlusselement vorgesehen, welches derart eine obere und eine untere Rasteinrichtung aufweist, dass das Abschlusselement durch einen Klemmschluss an einer oberseitigen Faltung und an einer unterseitigen Faltung anliegt, wobei das Abschlusselement einen Endfaltabschnitt filterelementaußenseitig umschließt.

Unter Faltabschnitten werden Filtermaterialabschnitte verstanden, die jeweils von Faltungen oder einer Endkante begrenzt sind. Das Faltenpack ist damit aus ziehharmonikaförmigen, durch Faltungen verbundene Faltabschnitte gebildet. Es liegen jeweils zwei Endfaltenabschnitte vor, die das Faltenpack parallel zu den Faltungen mit einer Endfaltenkante abschließen. Das Abschlusselement verfügt nun über Rasteinrichtungen, beispielsweise Vorsprünge Haken, Ösen, Griffe, Eingriffe oder Zapfen, die ein Anklemmen auf der Oberseite und auf der Unterseite des Faltenpacks ermöglichen. Dies hat insbesondere den Vorteil, dass keine weiteren Verklebungsmaßnahmen ergriffen werden müssen und dennoch eine Stabilisierung der durch die Abschlusselemente gebildeten Kanten oder Ränder des Filterelementes erzielt werden.

Das Abschlusselement umschließt erfindungsgemäß einen Endfaltenabschnitt filterelementaußenseitig. Es ist zum Beispiel möglich, das Abschlusselement mit einem ersten und einem zweiten Schenkel auszustatten, wobei die Schenkel im Wesentlichen einen rechten Winkel miteinander einschließen. An die Enden der Schenkel sind jeweils Rastmittel zum Klemmen des Abschlusselementes an oder auf eine Faltung vorgesehen.

In einer Variante des Filterelementes bzw. des Abschlusselementes weist das Abschlusselement mindestens einen ersten Schenkel auf, welcher auf einer filterelementoberseitigen Faltung anliegt, einen zweiten Schenkel, welcher im Wesentlichen parallel zu einem Endfaltenabschnitt verläuft, und einen dritten Schenkel auf, welcher auf einer filterelementunterseitigen Faltung anliegt. Das Abschlusselement kann zum Beispiel in der Art eines U-förmigen Profils mit Rastnasen oder Rasteinrichtungen an den parallelen Schenkeln des Us ausgebildet werden.

Vorzugsweise ist dabei der erste Schenkel mit einem ersten Rastmittel zum Fixieren des Abschlusselementes an einer filterelementoberseitigen Faltung versehen. Ferner kann der dritte Schenkel mit einem zweiten Rastmittel zum Fixieren des Abschlusselementes an einer filterelementunterseitigen Faltung versehen sein. Prinzipiell lässt sich dabei die Begrifflichkeit "ober- und unterseitig" austauschen. Unter einer Oberseite kann zum Beispiel die im Betrieb dem Reinfluid zugewandten Seite des Filterelements verstanden werden.

In bestimmten Ausführungsformen greifen die Rastmittel derart in Faltentäler der Faltungen des Faltenpacks ein, dass ein Abstand zwischen dem ersten Rastmittel und dem zweiten Rastmittel geringer ist als die Höhe des Faltenpacks.

Das jeweilige Rastmittel kann über die gesamte Breite der jeweiligen Endfalte verlaufen oder aber nur Abschnittsweise vorgesehen sein. Wenn nur Abschnitte entlang der Breite einer Faltenpackseite Rastmittel vorgesehen sind, kann Material für das Abschlusselement eingespart werden.

Das erfindungsgemäße Filterelement weist ausschließlich das Faltenpack, zwei auf die Faltenprofile der Faltungen aufgeklebte Rahmenelemente, z.B. Seitenbänder, und zwei auf die jeweiligen Endfalten geklemmte Abschlusselemente auf. In einer Abwandlung sind ferner zwei zweischenklige Stützelemente auf mindestens einer der Endfalten aufgeklebt vorgesehen.

Das Abschlusselement ist vorzugsweise aus einem steiferen Material als das Faltenpack und/oder die Rahmenelemente gefertigt. Als Materialien, die das Abschlusselement umfasst, kommen beispielsweise Kunststoffmaterialien wie Polypropylen, Polyamid oder Acrylnitrilbutadienacrylat in Frage.

Das Abschlusselement kann ferner mit einer nach außen abstehenden Dichtungslippe ausgestattet sein, die einen verbesserten Dichtschluss in einer Aufnahme für das Filterelement hervorruft. Darüber hinaus sind vorzugsweise Handhabungsmittel an dem Abschlusselement vorgesehen, die es erleichtern, das Filterelement in eine entsprechende Aufnahme einzusetzen oder herauszuziehen.

Weitere vorteilhafte Ausgestaltungen und Weiterbildungen der Erfindung sind Gegenstand der Unteransprüche sowie der im Folgenden beschriebenen Ausführungsbeispiele.

### Kurze Beschreibung der Zeichnungen

Die Erfindung wird nachfolgend ferner anhand mehrerer Ausführungsbeispiele unter Bezugnahme auf die beigelegten Figuren näher erläutert. Es zeigt dabei:
Fig. 1: eine perspektivische Ansicht eines ersten Ausführungsbeispiels eines Filterelementes;
Fig. 2: Querschnittsansichten von Ausführungsbeispielen von Abschlusselementen für Filterelemente.

In den Figuren sind gleiche oder funktionsgleiche Elemente, sofern nichts anderes angegeben ist, mit denselben Bezugszeichen versehen worden.

### Ausführungsform(en) der Erfindung

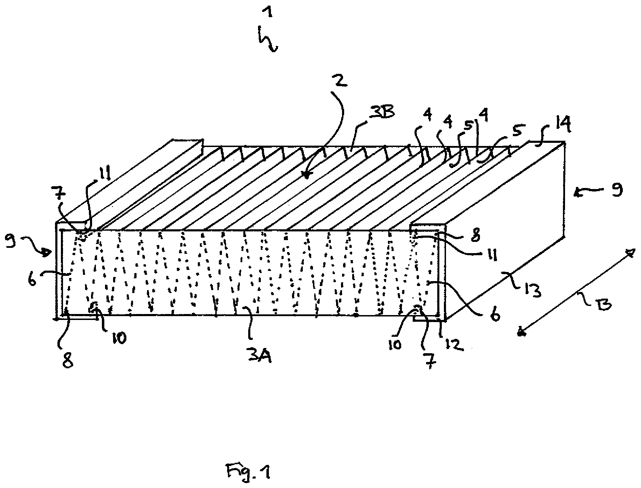

Die Figur 1 zeigt eine perspektivische Ansicht eines Filterelementes 1. Das Filterelement 1 hat einen Faltenpack 2, der aus zickzackförmigen Faltungen gebildet ist. Das Faltenpack besteht dabei aus Faltabschnitten 5, die an jeweiligen Faltungen 4 aneinander grenzen. In der Figur 1 sind lediglich beispielhaft einige Faltabschnitte und Faltungen mit Bezugszeichen versehen. Die Faltungen 5 des Faltenpacks 2 sind durch Rahmenelemente, z.B. Seitenbänder, z.B. aus Vlies, starre oder flexible Kunststoffbänder oder Rahmenelemente aus Papier oder Karton, 3A, 3B fixiert, die auf die entsprechenden Faltenprofilen aufgeklebt sind. In der Figur 1 sind bei dem perspektivisch nach vorne weisenden Rahmenelement 3A in gestrichelten Linien die Faltungsprofile des Faltenpacks 2 angedeutet. Die Faltenprofile sind somit durch das Rahmenelement 3A verdeckt.

Das Faltenpack 1 ist somit einerseits durch die Rahmenelemente 3A, 3B stabilisiert. Um ferner die Endfaltenabschnitte 6, welche durch das Faltenprofil, die Endfaltenkante 8 und die jeweilige Endfaltung 7 begrenzt sind, zu stützen und gegenüber Verformung oder Verzerrung zu schützen, sind Abschlusselemente 9 vorgesehen.

Das Abschlusselement 9 erstreckt sich dabei in dem dargestellten Beispiel über die gesamte Breite B des Filterelementes 1. Dabei ist das in der Figur 1 dargestellte Abschlusselement 9 in der Art eines U-förmigen Profils mit drei Schenkeln 12, 13, 14 ausgeführt.

Das Abschlusselement 9 ist über Rastmittel 10, 11 an das Filterelement 1 gekoppelt. Die Kopplung erfolgt durch Verrasten der Rastmittel 10, 11 an der Endfaltung 7 filterelementunterseitig und an der weiteren Faltung 17 filterelementoberseitig. Durch die Rastmittel 10, 11 ist somit das Abschlusselement 9 an das Faltenpack angeklemmt. In der Figur 1 sind die durch das vordere Rahmenelement 3A verdeckten Rastmittel 10, 11 gestrichelt angedeutet. Das Abschlusselement 9 zum Anklemmen oder Anrasten an die parallel zu den Faltungen vorliegende Endfalte(n) hat den Vorteil, dass keine weitere Verklebung notwendig ist, und damit ein besonders effizienter und schneller Herstellungsprozess realisierbar ist.

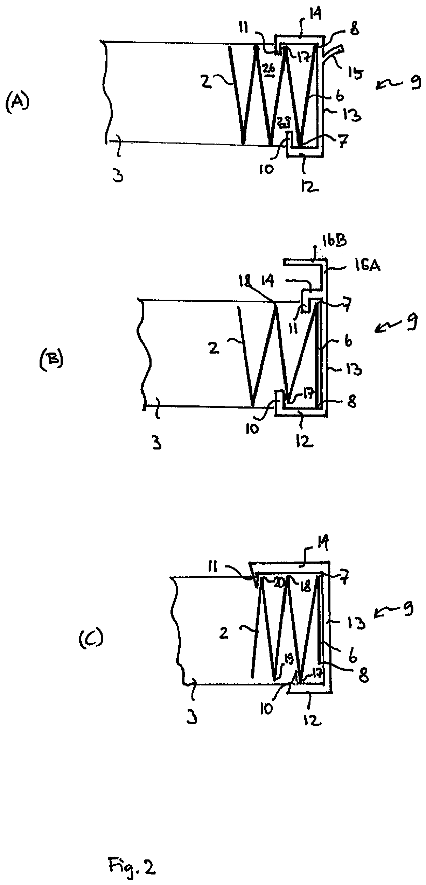

In der Figur 2 sind Querschnittsansichten von Ausführungsbeispielen für entsprechende Abschlusselemente 9 an Filterelemente dargestellt. In der Figur 2A zeigt der Querschnitt ein Profil des Faltenpacks 2 und ein angedeutetes darauf aufgeklebtes Rahmenelement 3. Ein entsprechendes Abschlusselement 9 weist wiederum einen ersten Schenkel 12, einen zweiten Schenkel 13 und einen dritten Schenkel 14 auf. Es sind Rastmittel 10, 11, die auch als Haken ausgeführt sein können, vorgesehen welche bei dem Beispiel der Figur 2A in Faltentäler 25, 26 der Faltungen eingreifen.

Es ergibt sich somit ein Klemmschluss durch die Rastmittel 10, 11 bzw. durch die in den Innenraum des Faltenpacks eindringenden Vorsprünge 10, 11 des Abschlusselementes 9. Der Klemmschluss erfolgt im Wesentlichen an den Faltungen 7, 17. Die Endfaltenkante 8 des Faltenpacks 2 liegt dabei an der Innenseite am Ursprung des durch den zweiten und den dritten Schenkel 13, 14 des Abschlusselementes 9 gebildeten Winkels.

Darüber hinaus ist das Abschlusselement 9 außenseitig mit einer Dichtlippe 15 versehen, die beispielsweise aus einem Elastomer gefertigt sein kann. Die Dichtlippe 15 drückt im eingesetzten Zustand des Filterelementes auf die Wandung der jeweiligen Aufnahmevorrichtung und führt zu einem verbesserten Dichtschluss.

In der Regel sind das Rahmenelement 3 und das Faltenpack 2 aus Filtervliesmaterial ausgeführt, wie zum Beispiel Polyesterfilze oder auch imprägnierte Filtermaterialien. Das Abschlusselement 9 kann dabei aus ähnlichen Materialien oder auch anderen Kunststoffen gefertigt werden. Prinzipiell ist auch eine besonders robuste Ausführung in Metall denkbar.

In der Figur 2B ist ein ähnliches Abschlusselement 9 dargestellt. Allerdings verläuft der Endfaltenabschnitt 6 im Wesentlichen parallel zu dem zweiten Schenkel 13 des Abschlusselementes 9. Filterelementoberseitig ist der Schenkel 14 derart ausgestaltet, dass das Rastmittel bereits an der Endfaltung 7 festgeklemmt ist. Filterelementunterseitig greift das Rastelement, der Rastpin oder die Rastklammer 10 in die vorletzte Faltung 17. Prinzipiell ist es von Vorteil, wenn nur wenige Faltungen durch die Schenkel 12 oder 14 des Abschlusselementes 9 überdeckt werden, da dadurch der Fluiddurchfluss weniger stark verringert wird.

Der mittlere, zweite Schenkel 13 des Abschlusselementes 9 ist mit einem Handhabungsmittel 16A, 16B verlängert ausgeführt. Die Handhabungsmittel, also ein verlängerter Abschnitt 16A und ein davon abgebogener Abschnitt 16B erleichtert das Ein- und Ausbauen der Filterelemente. Es ist ferner denkbar, die Handhabungsmittel in proprietärer Form auszuformen, wodurch darüber hinaus ein gewisser Kopierschutz des Filterelementes erzielt werden kann. Die Handhabungsmittel können demnach als Sicherheitskennzeichen dienen. Beispielsweise können die zusätzlichen Schenkel oder Abschnitte 16A, 16B an dem Abschlusselement 9 in der Art eines Schlüssel-Schloss-Prinzips in entsprechende Schienen oder Ausnehmungen einer Aufnahmenform angepasst sein. Das Profil der Schenkel 16A, 16B entspricht dann einem mechanischen Schlüsselbart. Das Handhabungsmittel 16A, 16B kann daher auch mehrere Schenkel oder Abschnitte aufweisen.

In der Figur 2C ist noch eine Ausführungsform eines Abschlusselementes 9 näher dargestellt. Filterelementoberseitig reicht der Schenkel 14 über drei Faltungen 7, 18, 20. Filterelementunterseitig wird lediglich eine Faltung 17 vom Schenkel 12 überdeckt. Die hakenförmig ausgeführten Rastmittel 10, 11 schaffen einen Klemmschluss - in der Darstellung der Figur 2 - in horizontaler Richtung, also zwischen dem mittleren Schenkel 13 in Richtung zu den Faltabschnitten des Faltenpacks 2. Neben den in der Figur 2 dargestellten Formen sind auch weitere Formen von Rastmitteln 10, 11 oder Handhabungsmitteln 16 denkbar.

Obwohl die vorliegende Erfindung anhand bevorzugter Ausführungsbeispiele näher erläutert wurde ist sie nicht darauf beschränkt, sondern vielfältig modifizierbar. Es können andere als die dargestellten Geometrien für Filterelemente oder Abschlusselemente gewählt werden. Dabei können die Gegebenheiten am Einbauort des Filters berücksichtigt werden oder auch weitere Funktionalitäten der Einzelteile, wie zum Beispiel des Abschlusselements, Rahmenelements oder Stützstreifens des Filterelements verwirklicht werden.

## Patentansprüche

1. Filterelement (1), insbesondere ein Innenraumfilter für ein Kraftfahrzeug, aufweisend ausschließlich einen Faltenpack (2), zwei auf die Faltenprofile der Faltungen (4) aufgeklebte Rahmenelemente und zwei auf die jeweiligen Endfalten geklemmte Abschlusselemente, wobei der Faltenpack (2) mittels Faltungen (4) zickzackförmig gefaltete Faltabschnitte (5) aufweist, und wobei ein an einen Endfaltenabschnitt (6) anbringbares Abschlusselement (9), derart eine obere und eine untere Rasteinrichtung (10, 11) aufweist, dass das Abschlusselement (9) durch einen Klemmschluss an einer oberseitigen Faltung (17) und an einer unterseitigen Faltung (7) anliegt und wobei das Abschlusselement (9) einen Endfaltenabschnitt (6) filterelementaußenseitig umschließt.

2. Filterelement (1) nach Anspruch 1, wobei das Abschlusselement (9) einen ersten und einen zweiten Schenkel (13, 14), welche im Wesentlichen einen rechten Winkel einschließenden, aufweisen, wobei an den Enden der Schenkel (13, 14) jeweils Rastmittel (11, 10) zum Klemmen des Abschlusselements (9) an oder auf eine Faltung (7, 17, 18) vorgesehen sind.

3. Filterelement (1) nach einem der Ansprüche 1 oder 2, wobei das Abschlusselement (9) mindestens einen ersten Schenkel (14), welcher auf einer filterelementoberseitigen Faltung (7, 18, 20) anliegt, einen zweiten Schenkel (13), welcher im Wesentlichen parallel zu einem Endfaltenabschnitt (6) verläuft, und einen dritten Schenkel (12) aufweist, welcher auf einer filterelementunterseitigen Faltung (7, 17) anliegt.

4. Filterelement (1) nach Anspruch 3, wobei der erste Schenkel (14) ein erstes Rastmittel (11) zum Fixieren des Abschlusselements (9) an einer filterelementoberseitigen Faltung (7, 17, 18) aufweist.

5. Filterelement (1) nach Anspruch 3 oder 4, wobei der dritte Schenkel (12) ein zweites Rastmittel (10) zum Fixieren des Abschlusselements (9) an einer filterelementunterseitigen Faltung (7, 17) aufweist.

6. Filterelement (1) nach einem der Ansprüche 3 - 5, wobei die Rastmittel (10, 11) derart in Faltentäler (25, 26) der Faltungen (4) des Faltenpacks (2) eingreifen, dass ein Abstand (A) zwischen dem ersten Rastmittel (11) und dem zweiten Rastmittel (10) geringer ist als die Höhe (H) des Faltenpacks (2).

7. Filterelement (1) nach einem der Ansprüche 1 - 6, wobei das jeweilige Rastmittel (10, 11) über eine gesamte Breite (B) der jeweiligen Endfalte (6, 7) verläuft.

8. Filterelement (1) nach einem der Ansprüche 1 - 6, wobei entlang der Breite (B) abschnittsweise Rastmittel (10, 11) vorgesehen sind.

9. Filterelement (1) nach einem der Ansprüche 1 - 8, wobei das Abschlusselement (9) aus einem steiferen Material als das Faltenpack (2) und/oder die Rahmenelemente (3) gefertigt ist.

10. Filterelement (1) nach einem der Ansprüche 1 - 9, wobei das Abschlusselement (9) eine nach außen abstehende Dichtungslippe (15) aufweist.

11. Filterelement (1) nach einem der Ansprüche 1 - 10, wobei das Abschlusselement (9) ein Handhabungsmittel (16) aufweist.

## Claims

1. Filter element (1), in particular a cabin filter for a motor vehicle, featuring exclusively a pleated pack (2), two frame elements glued to the folding profiles of the foldings (4) and two end elements clamped to the respective end folds, wherein the pleated pack (2) features by means of foldings (4) zigzag-folded fold sections (5), and wherein an end element (9) attachable to an end fold section (6) features a top and a bottom locking means (10, 11) in such a way that the end element (9) contacts a folding (17) on the upper side and a folding (7) on the underside by means of a clamping closure, and wherein the end element (9) encloses an end fold section (6) on the outside of the filter element.

2. Filter element (1) according to claim 1, wherein the end element (9) features a first and a second leg (13, 14) which form substantially a right angle, wherein at the ends of the legs (13, 14) latching means (11, 10) are provided each for clamping the end element (9) to or on a folding (7, 17, 18).

3. Filter element (1) according to one of the claims 1 or 2, wherein the end element (9) features at least a first leg (14) contacting a folding (7, 8, 20) on the upper side of the filter element, a second leg (13) extending substantially parallel to an end fold section (6), and a third leg (12) contacting the folding (7, 17) on the underside of the filter element.

4. Filter element (1) according to claim 3, wherein the first leg (14) features a first latching means (11) for fixing the end element (9) at a folding (7, 17, 18) on the upper side of the filter element.

5. Filter element (1) according to claim 3 or 4, wherein the third leg (12) features a second latching means (10) for fixing the end element (9) at a folding (7, 17) on the underside of the filter element.

6. Filter element (1) according to one of the claims 3 to 5, wherein the latching means (10, 11) engage into the pleat valleys (25, 26) of the foldings (4) of the pleated pack (2) in such a way that a distance (A) between the first latching means (11) and the second latching means (10) is smaller than the height (H) of the pleated pack (2).

7. Filter element (1) according to one of the claims 1 to 6, wherein the respective latching means (10, 11) extends across the entire width (B) of the respective end fold (6, 7).

8. Filter element (1) according to one of the claims 1 to 6, wherein latching means (10, 11) are provided sectionwise along the width (B).

9. Filter element (1) according to one of the claims 1 to 8, wherein the end element (9) is made of a stiffer material than the pleated pack (2) and/or the frame elements (3).

10. Filter element (1) according to one of the claims 1 to 9, wherein the end element (9) features an outwardly protruding sealing lip (15).

11. Filter element (1) according to one of the claims 1 to 10, wherein the end element (9) features a handling means (16).

## Revendications

1. Élément filtrant (1), en particulier filtre d'habitacle pour un véhicule automobile, comportant exclusivement un ensemble de plis (2), deux éléments-cadres collés sur les profils de plis des pliages (4) et deux éléments terminaux serrés sur les plis d'extrémité correspondants, dans lequel l'ensemble de plis (2) comporte des sections de pliage (5) pliées en zigzag au moyen de plis (4), et dans lequel un élément terminal (9) peut être monté sur une section de plis d'extrémité (6) comportant un dispositif d'enclenchement supérieur et un dispositif d'enclenchement inférieur (10, 11) de sorte que l'élément terminal (9) touche, par emboîtement, un pli (17) situé du côté supérieur et un pli (7) situé du côté inférieur, et dans lequel l'élément terminal (9) encercle une section de plis d'extrémité (6) du côté extérieur de l'élément filtrant.

2. Élément filtrant (1) selon la revendication 1, dans lequel l'élément terminal (9) est doté d'une première et d'une deuxième branche (13, 14) qui forment essentiellement un angle droit, dans lequel des éléments d'encliquetage (11, 10) sont prévus aux extrémités des branches (13, 14) afin de serrer l'élément terminal (9) contre ou sur un pli (7, 17, 18).

3. Élément filtrant (1) selon l'une des revendications 1 ou 2, dans lequel l'élément terminal (9) est doté d'au moins une première branche (14) qui touche un pli (7, 18, 20) situé du côté supérieur de l'élément filtrant, d'une deuxième branche (13) qui évolue essentiellement de manière parallèle à une section de plis d'extrémité (6) et d'une troisième branche (12) qui touche un pli (7, 17) situé du côté inférieur de l'élément filtrant.

4. Élément filtrant (1) selon la revendication 3, dans lequel la première branche (14) comporte un premier élément d'encliquetage (11) servant à fixer l'élément terminal (9) sur un pli (7, 17, 18) situé du côté supérieur de l'élément filtrant.

5. Élément filtrant (1) selon la revendication 3 ou 4, dans lequel la troisième branche (12) comporte un deuxième élément d'encliquetage (10) servant à fixer l'élément terminal (9) sur un pli (7, 17) situé du côté inférieur de l'élément filtrant.

6. Élément filtrant (1) selon l'une des revendications 3 à 5, dans lequel les éléments d'encliquetage (10, 11) s'engrènent dans des creux de plis (25, 26) des plis (4) de l'ensemble de plis (2) de sorte à ménager un espace (A) entre le premier élément d'encliquetage (11) et le deuxième élément d'encliquetage (10) qui soit inférieur à la hauteur (H) de l'ensemble de plis (2).

7. Élément filtrant (1) selon l'une des revendications 1 à 6, dans lequel l'élément d'encliquetage (10, 11) respectif évolue sur une largeur totale (B) du pli d'extrémité (6, 7) respectif.

8. Élément filtrant (1) selon l'une des revendications 1 à 6, dans lequel des éléments d'encliquetage (10, 11) sont prévus dans certaines sections dans le sens de la largeur (B).

9. Élément filtrant (1) selon l'une des revendications 1 à 8, dans lequel l'élément terminal (9) est constitué d'un matériau plus rigide que celui de l'ensemble de plis (2) et/ou celui des éléments-cadres (3).

10. Élément filtrant (1) selon l'une des revendications 1 à 9, dans lequel l'élément terminal (9) présente une lèvre d'étanchéité (15) en saillie vers l'extérieur.

11. Élément filtrant (1) selon l'une des revendications 1 à 10, dans lequel l'élément terminal (9) présente un élément de manutention (16).
